# EUROPÄISCHE PATENTANMELDUNG

(11) **EP 4 614 417 A1**
(43) Veröffentlichungstag der Anmeldung: **10.09.2025**
(21) Anmeldenummer: 25161558.9
(22) Anmeldetag: 04.03.2025
(51) Int. Cl.: G06Q 30/018, G06Q 30/0601

(54) **VERFAHREN ZUM INDIVIDUALISIEREN EINES GEGENSTANDS UND EIN HIERFÜR AUSGEBILDETES SYSTEM**

(30) Priorität: 05.03.2024 DE 102024106352
(71) Anmelder: triboox GmbH & Co. KG, 20249 Hamburg (DE)
(72) Erfinder:
(74) Vertreter: Nübold, Henrik

(57) **Zusammenfassung**

Vorgeschlagen wird ein Verfahren zum Individualisieren eines Gegenstands (10), beinhaltend:
a) Bereitstellen eines zu individualisierenden Gegenstands (10) sowie einer zum Individualisieren des Gegenstands (10) eingerichteten und ansteuerbaren digitalen oder analogen Individualisierungsvorrichtung (9);
b) Erzeugen einer Original-Markierung (3) und einer dieser Original-Markierung (3) entsprechenden digitalen Datei (5);
c) Erzeugen, basierend auf der genannten Datei (5), einer Markierungsdatei (7) mit Informationen bezüglich des Gegenstands (10) sowie der Original-Markierung (3), wobei die Markierungsdatei (7) zum einmaligen oder anzahlmäßig limitierten Reproduzieren der Original-Markierung (3) oder einer die Original-Markierung (3) repräsentierenden Verkörperung (17) in untrennbarem Zusammenhang mit dem zu individualisierenden Gegenstand (10) durch Ansteuern der Individualisierungsvorrichtung (9) ausgebildet ist;
d) Ansteuern der Individualisierungsvorrichtung (9) mittels der Markierungsdatei (7), so dass eine Reproduktion (12) der Original-Markierung (3) oder eine die Original-Markierung (3) repräsentierende Verkörperung (17) in einem untrennbaren Zusammenhang mit dem zu individualisierenden Gegenstand (10) erzeugt wird;
e) Erstellen eines sowohl mit der Datei (5) als auch mit dem individualisierten Gegenstand (11) verknüpften digitalen Echtheitszertifikats (14);
f) Ausgeben des individualisierten Gegenstands (11) zusammen mit dem Echtheitszertifikat (14) und optional zusammen mit der Datei (5).

## Beschreibung

Die Erfindung betrifft ein Verfahren zum Individualisieren eines Gegenstands und ein hierfür ausgebildetes System.

Gegenstände, die nicht individuell hergestellt werden, sondern aus einer Art "Massenproduktion" stammen, gewinnen durch Individualisierung an Wert - nicht nur subjektiv für den Eigentümer, sondern auch ganz objektiv. Beispiele hierfür sind z.B. Bücher mit Widmung von einem bekannten Autor, ein von bekannten Musikern signiertes Band-T-Shirt oder eine digitale Version eines Kunstwerks mit Echtheitszertifikat.

Oftmals ist es potentiellen Interessenten aber nicht möglich, einen solchen Gegenstand zu erwerben bzw. erlangen, weil er nur zu einer bestimmten Zeit an einem bestimmten Ort, z.B. bei einer Autorenlesung "hergestellt" wird und deshalb nur sehr eingeschränkt verfügbar ist. Außerdem kann es selbst bei Anwesenheit bei einem solchen Ereignis aufgrund einer Vielzahl an Interessenten unmöglich sein, an einen solchen Gegenstand zu gelangen.

Der Erfindung liegt die Aufgabe zugrunde, ein Verfahren und ein System anzugeben, mit dem sich diese Probleme umgehen lassen, um möglichst vielen Interessenten einen individualisierten Gegenstand zur Verfügung stellen zu können.

Diese Aufgabe wird erfindungsgemäß gelöst durch ein Verfahren zum Individualisieren eines Gegenstands, beinhaltend:
a) Bereitstellen eines zu individualisierenden Gegenstands sowie einer zum Individualisieren des Gegenstands eingerichteten und ansteuerbaren digitalen oder analogen Individualisierungsvorrichtung; der Gegenstand kann ein digitaler Gegenstand (z.B. ein digitales Musikstück) oder ein analoger Gegenstand sein (z.B. ein Buch). Er kann einmalig oder in limitierter Anzahl zu individualisieren sein.
b) Erzeugen einer Original-Markierung und einer dieser Original-Markierung entsprechenden digitalen Datei; vorzugsweise wird die Original-Markierung in Echtzeit durch eine Person erzeugt, insbesondere durch eine bekannte Persönlichkeit. Die daraus erzeugte Datei kann gegebenenfalls um eine Dokumentation ergänzt sein, die angibt von wem, wann, wo, für wen, etc. die Original-Markierung erzeugt wurde.
c) Erzeugen, basierend auf der genannten Datei, einer Markierungsdatei mit Informationen bezüglich des Gegenstands sowie der Original-Markierung, wobei die Markierungsdatei zum einmaligen oder anzahlmäßig limitierten Reproduzieren der Original-Markierung oder einer die Original-Markierung repräsentierenden Verkörperung in untrennbarem Zusammenhang mit dem zu individualisierenden Gegenstand durch Ansteuern der Individualisierungsvorrichtung ausgebildet ist; die genannte Verkörperung kann z.B. einen Link beinhalten und als QR-Code oder dgl. ausgebildet sein. "In untrennbarem Zusammenhang" bedeutet, dass die genannte Reproduktion der Original-Markierung bzw. deren Verkörperung nicht ohne Weiteres bzw. nicht zerstörungsfrei von dem Gegenstand zu trennen oder zu entfernen ist. Dies gilt z.B. für einen Aufdruck auf einer Buchseite oder einen nicht separierbaren Zusatz zu einer digitalen Musikdatei. Die Markierungsdatei ist so beschaffen, dass sie nur einmalig oder begrenzt oft verwendbar ist. Da sie Informationen bezüglich des Gegenstands enthält, z.B. Koordinaten, Ankerpunkte oder dgl., ist es möglich, den Gegenstand gezielt, z.B. an wenigstens einer bestimmten Stelle, wie auf der ersten Seite eines Buchs, zu individualisieren.
d) Ansteuern der Individualisierungsvorrichtung mittels der Markierungsdatei, so dass eine Reproduktion der Original-Markierung oder eine die Original-Markierung repräsentierende Verkörperung in einem untrennbaren Zusammenhang mit dem zu individualisierenden Gegenstand erzeugt wird; insbesondere auf die Bedeutung von "in untrennbarem Zusammenhang" wurde oben schon hingewiesen.
e) Erstellen eines sowohl mit der Datei als auch mit dem individualisierten Gegenstand verknüpften Echtheitszertifikats, vorzugsweise eines digitalen Echtheitszertifikats; dieses Echtheitszertifikat dient dazu nachzuweisen, dass die Individualisierung bzw. die Original-Markierung tatsächlich einen besonderen Wert besitzt und nicht beliebig oft reproduziert wurde.
f) Ausgeben des individualisierten Gegenstands zusammen mit dem Echtheitszertifikat und optional zusammen mit der Datei. Wenn der Interessent die Datei, die die Original-Markierung enthält bzw. repräsentiert, besitzt, kann es unter Umständen möglich sein, die Reproduktion zu wiederholen, wenn z.B. der Gegenstand nachweisbar zerstört wurde oder wenn die Datei dies explizit zulässt.

Die Aufgabe wird auch gelöst durch ein System zum Individualisieren von Gegenständen, für das grundsätzlich dieselben Anmerkungen gelten, die vorstehend bezüglich des Verfahrens gemacht wurden. Es umfasst:
a) an einem ersten Ort eine zum Markieren des Gegenstands eingerichtete und ansteuerbare Individualisierungsvorrichtung, die zumindest während des Individualisierungsvorgangs mit einer Fixierungsvorrichtung zum Fixieren des Gegenstands zusammenwirkt; mittels der Fixierungsvorrichtung kann der Gegenstand gehalten werden, während er individualisiert wird. Die Fixierungsvorrichtung kann Teil der Individualisierungsvorrichtung sein.
b) an einem zweiten Ort, der von dem ersten Ort entfernt liegt, eine Eingabevorrichtung, die zum Erzeugen wenigstens einer Original-Markierung durch Betätigen der Eingabevorrichtung ausgebildet ist; der erste Ort und der zweite Ort können im geographischen Sinn weit voneinander entfernt sein und insbesondere in verschiedenen Städten, in verschiedenen Ländern und/oder auf verschiedenen Kontinenten liegen.
c) eine Digitalisierungsvorrichtung, die dazu ausgebildet ist, basierend auf der Original-Markierung eine der Original-Markierung entsprechende digitale Datei zu erzeugen, wobei die Digitalisierungsvorrichtung gemäß einer ersten Variante an dem zweiten Ort und gemäß einer zweiten Variante an dem ersten Ort vorhanden ist; letztendlich kommt es nicht darauf an, wo die digitale Datei erzeugt wird, da sie leicht transferierbar ist.
d) ein digitales Computer- oder Telekommunikationsnetz zum Übertragen der Datei von der Digitalisierungsvorrichtung zu der Individualisierungsvorrichtung bei der ersten Variante oder zum Übertragen einer der Original-Markierung entsprechenden Eingabe von dem zweiten Ort zu der Digitalisierungsvorrichtung bei der zweiten Variante; je nach Variante wird also entweder die digitale Datei übertragen oder die der Original-Markierung entsprechende Eingabe, aus der dann später bzw. an einem anderen Ort mittels der Digitalisierungsvorrichtung die digitale Datei erzeugt werden kann.
e) eine Ansteuerungsvorrichtung, die dazu ausgebildet ist, basierend auf der genannten Datei, eine Markierungsdatei mit Informationen bezüglich des Gegenstands sowie der Original-Markierung zu erzeugen, wobei die Markierungsdatei zum einmaligen oder anzahlmäßig limitierten Reproduzieren der Original-Markierung oder einer die Original-Markierung repräsentierenden Verkörperung in untrennbarem Zusammenhang mit dem zu individualisierenden Gegenstand durch Ansteuern der Individualisierungsvorrichtung ausgebildet ist;
f) eine Zertifizierungsvorrichtung, die zum Erstellen eines sowohl mit der Datei als auch mit dem individualisierten Gegenstand verknüpften, vorzugsweise digitalen Echtheitszertifikats ausgebildet ist;
wobei die Individualisierungsvorrichtung dazu ausgebildet ist, den Gegenstand bei Ansteuerung der Individualisierungsvorrichtung mittels der Markierungsdatei mit einer Reproduktion der Original-Markierung oder einer die Original-Markierung repräsentierenden Verkörperung zu versehen.

Das Echtheitszertifikat ist vorzugsweise digital; allerdings ist im Rahmen der Erfindung auch die (zusätzliche) Ausstellung einer gedruckten Echtheitsurkunde grundsätzlich möglich.

Auf diese Weise kann ausgehend von einem (Massen-) Gegenstand und einer Original-Markierung, die regelmäßig nicht an einem gemeinsamen Ort vorliegen werden, ein individualisierter Gegenstand erzeugt und zusammen mit einem Echtheitszertifikat an einen Interessenten ausgegeben (verkauft) werden. Quasi beliebige Gegenstände lassen sich auf diese Weise individualisieren und aufwerten. Die Erfindung ist dabei explizit nicht auf analoge (körperhafte) Gegenstände beschränkt.

Die Original-Markierung kann ebenfalls vielfältige (analoge oder digitale) Formen annehmen, die von der handschriftlichen Widmung durch einen Autor bis zu einer (per Link abrufbaren) Videobotschaft eines Filmstars reichen können - auch in beliebiger Kombination.

Folgende Ausgestaltungen der Erfindung haben sich aus Sicht des Anmelders als besonders vorteilhaft erwiesen:
Bei einer Weiterbildung des erfindungsgemäßen Verfahrens kann/können
- in Schritt a) der Gegenstand und die Individualisierungsvorrichtung an einem ersten Ort bereitgestellt werden; und
- in Schritt b) die Datei an einem zweiten Ort erzeugt werden, der von dem ersten Ort geographisch getrennt ist, und anschließend die Datei von dem zweiten Ort zu dem ersten Ort über ein digitales Computer- oder Telekommunikationsnetz übertragen werden; oder
- alternativ in Schritt b) eine der Original-Markierung entsprechende Eingabe von einem zweiten Ort, der von dem ersten Ort geographisch getrennt ist, zu dem ersten Ort über ein digitales Computer- oder Telekommunikationsnetz übertragen und eine der Eingabe entsprechende Datei an dem ersten Ort erzeugt werden; und
- in Schritt f) der individualisierte Gegenstand und das Echtheitszertifikat an dem ersten Ort ausgegeben werden.

Hierauf wurde oben mit Blick auf die Vorrichtung schon hingewiesen. Die Ausgestaltung ermöglicht es z.B., im Rahmen einer in Los Angeles stattfindenden Autorenlesung in Hamburg einen individualisierten Gegenstand zu erzeugen, indem entweder die Eingabe oder gleich die daraus erzeugte Datei über das genannte Kommunikationsnetz übertragen wird, um darauf basierend die Original-Markierung zu reproduzieren. Der Interessent kann dann in Hamburg einen individualisierten Gegenstand mit einer in Los Angeles erzeugten (und in Hamburg reproduzierten) Original-Markierung samt Echtheitszertifikat in Empfang nehmen, bevorzugt nahezu ohne Zeitverzögerung.

Das Echtheitszertifikat und ggf. auch die Datei (mit der Original-Markierung) kann insbesondere elektronisch zur Verfügung gestellt werden, z.B. per E-Mail oder Download-Link.

Bei einer anderen Weiterbildung des erfindungsgemäßen Verfahrens kann die Datei derart erzeugt werden, dass sie fälschungssicher und/oder einzigartig und/oder handelbar ist, insbesondere in Form eines NFT.

Dadurch gelangt der Interessent in den Besitz einer Datei (mit der Original-Markierung), die erwiesenermaßen und nachweisbar einmalig ist, was ihren Wert vervielfachen kann.

Bei einer entsprechenden Weiterbildung des erfindungsgemäßen Systems kann vorgesehen sein, dass die Datei wenigstens eine der folgenden Eigenschaften besitzt: fälschungssicher, einzigartig, z.B. nach Art eines NFT, handelbar.

Bei einer Weiterbildung des erfindungsgemäßen Verfahrens kann vorgesehen sein, dass die in Schritt b) erzeugte Datei einer von dem ersten und zweiten Ort unabhängigen Entität als Eigentum zur Verfügung gestellt wird, vorzugsweise entgeltlich.

Diese Entität kann dann für eine Bereitstellung der Datei an dem ersten Ort zwecks Erzeugens der Markierungsdatei gemäß Schritt c) und Ansteuerns der Individualisierungsvorrichtung gemäß Schritt d) sorgen. Dies geschieht vorzugsweise einmalig oder gemäß einer zahlenmäßig limitierten Anzahl.

Die genannte "unabhängige Entität" ist bevorzugt ein Interessent, der zunächst nur die genannte Datei erhält/erwirbt (z.B. von dem zweiten Ort) und erst später mittels dieser Datei die Individualisierung erstellen lässt (z.B. an dem ersten Ort). Auf diese Weise können die genannten Vorgänge zeitlich entkoppelt werden. So kann beispielsweise die Datei nach Art eines Gutscheins verschenkt werden, und der Beschenkte nutzt sie später für die Individualisierung.

Eine entsprechende Ausgestaltung des erfindungsgemäßen Systems sieht vor, dass gemäß der ersten Variante zwischen Digitalisierungsvorrichtung und Individualisierungsvorrichtung eine Zwischenstation mit einer Speichervorrichtung für die Datei geschaltet ist, welche Zwischenstation vorzugsweise von dem ersten Ort und/oder von dem zweiten Ort unabhängig ist. Bei dieser Zwischenstation handelt es sich bevorzugt um den Interessenten bzw. dessen PC oder einen mit dem PC verbundenen (verbindbaren) Server. So kann der Interessent die Datei speichern, z.B. als Anhang zu einer E-Mail, und später für die Individualisierung verwenden, indem er insbesondere sie zu dem ersten Ort schickt oder selbst dorthin bringt.

Der erste Ort kann, bezogen auf das obige Beispiel, eine Buchhandlung in Hamburg sein, während es sich bei dem zweiten Ort um ein Kongresszentrum in Los Angeles handelt. Der Interessent kann in der Buchhandlung anwesend sein, oder er kann zuhause an seinem PC sitzen (nachfolgend auch als "dritter Ort" bezeichnet).

Es ist auch möglich, Gegenstände "auf Vorrat" zu individualisieren, also bevor ein Interessent vorhanden ist. Ebenso kann die Datei (zum Erwerb) vorgehalten werden, z.B. an dem ersten Ort, um dann bei Interesse (bei Erwerb) einen Gegenstand "ad hoc" zu individualisieren.

Die zahlenmäßige Limitierung der Individualisierung kann in allen Fällen mit ausgegeben werden, z.B. mitgedruckt werden, wie von Kunstdrucken bekannt.

Bei einer wieder anderen Weiterbildung des erfindungsgemäßen Verfahrens kann vorgesehen sein, dass zumindest die Schritte b) bis d) im Wesentlichen gleichzeitig in Echtzeit ablaufen - abgesehen von einer endlichen physikalischen Signallaufzeit über das Kommunikationsnetz.

Auf diese Weise kann - wiederum bezogen auf das obige Beispiel - ein Buch im Hamburg in Echtzeit individualisiert werden, während der Autor oder die Autorin in Los Angeles eine entsprechende Signierveranstaltung abhält. Ein (gewollter) Zeitversatz ist ebenso möglich.

Bei einer entsprechenden Weiterbildung des erfindungsgemäßen Systems kann vorgesehen sein, dass das digitale Computer- oder Telekommunikationsnetz für eine Echtzeitverbindung zwischen dem ersten Ort und dem zweiten Ort und vorzugsweise auch zumindest von dem ersten Ort und/oder dem zweiten Ort zu der Zwischenstation (dem dritten Ort) eingerichtet ist.

Bei einer wieder anderen Weiterbildung des erfindungsgemäßen Verfahrens kann vorgesehen sein, dass zusätzlich eine Bild- und/oder Tonübertragung erfolgt, insbesondere über das digitale Computer- oder Telekommunikationsnetz,
i) von dem zweiten Ort zu dem ersten Ort oder
ii) von dem ersten Ort und/oder von dem zweiten Ort zu wenigstens einem dritten Ort, vorzugsweise jeweils bidirektional.

Auf diese Weise kann der Interessent der Erzeugung der Original-Markierung gewissermaßen "live" beiwohnen. Auch ein Austausch mit dem Erzeuger oder der Erzeugerin der Original-Markierung ist möglich. Die Bild- und/oder Tonübertragung kann aufgezeichnet oder zwischengespeichert werden. Sie kann optionaler Bestandteil der genannten Datei sein. Ein (gewollter) Zeitversatz ist somit ebenso möglich.

Bei einer entsprechenden Weiterbildung des erfindungsgemäßen Systems kann vorgesehen sein, dass das digitale Computer- oder Telekommunikationsnetz zusätzlich für eine Übertragung von Bild und/oder Ton zwischen dem ersten Ort und dem zweiten Ort und vorzugsweise auch zumindest von dem ersten Ort und/oder dem zweiten Ort zu der Zwischenstation (dem dritten Ort) eingerichtet ist, vorzugsweise jeweils bidirektional.

Bei einer bevorzugten Weiterbildung des erfindungsgemäßen Verfahrens kann vorgesehen sein, dass eine der Original-Markierung entsprechende Eingabe zumindest zum Teil per Hand, insbesondere handschriftlich oder als Gemälde/Zeichnung, oder als Audio- und/oder Videoaufzeichnung erfolgt.

Auf diese Weise lässt sich eine wertvolle und potentiell einzigartige Original-Markierung und eine entsprechende Reproduktion derselben erzeugen. Die Individualisierungsvorrichtung sollte auf das Format der Eingabe abgestimmt sein, also z.B. eine farbige Reproduktion ermöglichen, wenn die Original-Markierung farbig erzeugt wird/wurde.

Die Original-Markierung kann abfotografiert und dann digitalisiert werden. Alternativ kann auch "elektronisches Papier" oder dgl. verwendet werden, dass zusammen mit geeigneten Spezialstiften die Digitalisierung von Handschrift und -Zeichnungen ermöglicht. Auch der Einsatz von Touchscreens oder dgl. ist möglich.

Bei einer entsprechenden Weiterbildung des erfindungsgemäßen Systems kann die Eingabevorrichtung als Eingabevorrichtung für eine Handzeichnung oder Handschrift oder als Eingabevorrichtung für Audio-/Videodaten ausgebildet sein, die vorzugsweise die genannte Digitalisierungsvorrichtung bereits beinhaltet oder mit dieser wirkverbunden ist.

Bei einer äußerst bevorzugten Weiterbildung des erfindungsgemäßen Verfahrens kann vorgesehen sein, dass zeitlich parallel zu Schritt b) digital dokumentiert und in einer Dokumentationsdatei gespeichert wird, wie die Original-Markierung erzeugt wird, d.h. von wem und/oder für wen, an welchem Ort und/oder zu welcher exakten Ortszeit, beispielsweise zumindest teilweise in Form eine Multimedia-Datei. Vorzugsweise kann die Dokumentationsdatei in Schritt f) mit ausgegeben werden, nachdem sie insbesondere vorher mit (zu dem ersten oder dritten Ort) übertragen wurde.

Es wurde schon darauf hingewiesen, dass in Weiterbildung des erfindungsgemäßen Systems der Gegenstand ein Buch, Tonträger, Kunstwerk, Gebrauchsgegenstand oder Bekleidungsstück sein kann. Die Individualisierungsvorrichtung umfasst eine geeignete Halteeinrichtung bzw. Positionierungseinrichtung für den speziellen Gegenstand und im Falle eines Buchs optional insbesondere eine Umblättereinrichtung für die Buchseiten, die nach Maßgabe durch die Markierungsdatei mit ansteuerbar ist.

Speziell bei Büchern ist es auf diese Weise möglich, nicht nur eine vom Autor signierte, sondern eine vom Autor kommentierte, individualisierte Ausgabe zu erstellen, bei der Markierungen auf mehreren Buchseiten erzeugt werden.

Bei einer besonders bevorzugten Weiterbildung des erfindungsgemäßen Systems kann vorgesehen sein, dass zumindest die Individualisierungsvorrichtung mit einer Herstellungsvorrichtung zum Herstellen des Gegenstands zusammenwirkt, so dass der Gegenstand gleich bei seiner Herstellung mit der Reproduktion der Original-Markierung versehbar ist (was immer auch die schon genannte Verkörperung der Original-Markierung mit einschließt).

Auf diese Weise lassen sich "on demand" individualisierte Gegenstände erzeugen. Zum Beispiel kann ein Buch speziell für einen Interessenten mit Individualisierung gedruckt werden, oder ein Band-T-Shirt wird für den Interessenten in der gewünschten Größe beflockt und dann individualisiert.

Bei einer wieder anderen Weiterbildung des erfindungsgemäßen Systems kann vorgesehen sein, dass die Individualisierungsvorrichtung als Plotter, Drucker, Stempelvorrichtung oder Graviervorrichtung ausgebildet ist.

Die genaue Ausgestaltung wird von der Art des zu individualisierenden Gegenstands abhängen.

Auch digitale Gegenstände können durch geeignete Vorrichtungen individualisiert werden, z.B. durch Verknüpfung (Verbindung) mit einer entsprechenden Datei.

Weitere Eigenschaften und Vorteile der Erfindung ergeben sich aus den nachfolgenden Beschreibungen von Ausführungsbeispielen anhand der Zeichnung.
Figur 1 zeigt schematisch eine erste Ausgestaltung des Verfahrens und ein entsprechendes System;
Figur 2 zeigt schematisch eine zweite Ausgestaltung des Verfahrens und ein entsprechendes System;
Figur 3 zeigt schematisch eine dritte Ausgestaltung des Verfahrens und ein entsprechendes System; und
Figur 4 zeigt schematisch eine vierte Ausgestaltung des Verfahrens und ein entsprechendes System.

In allen Figuren bezeichnen gleiche Bezugszeichen gleiche oder gleichwirkende Elemente.

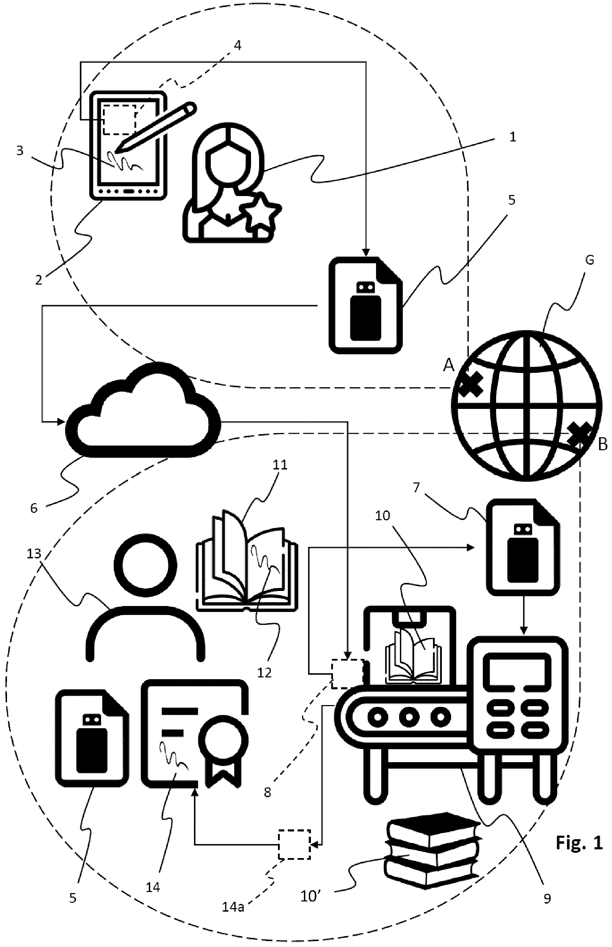

Gemäß Figur 1 erzeugt eine (berühmte) Autorin 1 an einem Ort A per Eingabe in ein Eingabegerät 2 eine handschriftliche Original-Markierung 3, die durch eine in dem Eingabegerät enthaltene Digitalisierungsvorrichtung 4 in eine entsprechende digitale Datei 5 übertragen wird. Die Datei 5 wird anschließend über ein Kommunikationsnetz (z.B. das Internet) 6 zu einem Ort B übertragen, der vom Ort A weit entfernt liegt (was in den Figuren jeweils durch einen Globus G symbolisiert wird).

Es ist alternativ auch möglich, die Digitalisierungsvorrichtung 4 an dem Ort B (oder an einem beliebigen anderen Ort) vorzusehen und die Original-Markierung 3 bzw. die betreffende Eingabe zur Erzeugung der Datei 5 dorthin zu senden, insbesondere über das Kommunikationsnetz 6.

An dem Ort B wird aus der Datei 5 eine sog. Markierungsdatei 7 erzeugt, bevorzugt durch eine Ansteuerungsvorrichtung 8, die vorteilhafter Weise Teil einer Individualisierungsvorrichtung 9 ist. Diese Markierungsdatei 7 wird dann dazu genutzt, mittels der Individualisierungsvorrichtung 9 einen Gegenstand 10 aus einer Menge identischer Gegenstände 10' zu individualisieren, indem die Individualisierungsvorrichtung 9 durch die Ansteuerungsvorrichtung 8 mittels der Markierungsdatei 7 geeignet angesteuert wird. Die Markierungsdatei 7 umfasst zu diesem Zweck einerseits Informationen betreffend die Original-Markierung 3 (z.B. Skalierungsfaktor, Farbinformationen, etc.) und andererseits Informationen bezüglich des Gegenstands 10, z.B. Koordinaten, Ankerpunkte und/oder Positionsdaten zum Aufbringen einer Reproduktion 12 der Original-Markierung 3; bei Büchern insbesondere auch eine Seitennummer. Es entsteht so ein individualisierter Gegenstand 11, der eine untrennbar mit dem Gegenstand 11 verbundene Reproduktion 12 der Original-Markierung 3 aufweist; dies ist grundsätzlich nur einmalig oder in begrenzter Stückzahl möglich.

Die Individualisierungsvorrichtung 9 umfasst eine Halteeinrichtung zum Fixieren des Gegenstands 10, was aus Gründen der Übersichtlichkeit nicht weiter gezeigt ist. Wenn es sich um Bücher handelt, ist die Individualisierungsvorrichtung 9 bevorzugt als Drucker ausgebildet. Sie umfasst, was aus Gründen der Übersichtlichkeit ebenfalls nicht weiter gezeigt ist, neben der Halteeinrichtung bevorzugt noch eine Umblättereinrichtung für die Buchseiten, die nach Maßgabe durch die Markierungsdatei 7 mit ansteuerbar sein kann. Allerdings ist auch ein manuelles Umblättern möglich, wenn mehrere Buchseiten individualisiert werden sollen. Ein Bediener (nicht gezeigt) der Individualisierungsvorrichtung 9 wird dazu entsprechend aufgefordert.

Der Interessent 13 erhält am Ort B den individualisierten Gegenstand 11 mit der Reproduktion 12 der Original-Markierung. Zusätzlich erhält er eine Kopie der Datei 5 und ein Echtheitszertifikat 14, das vor Ort mittels einer Zertifizierungsvorrichtung 14a erzeugt wird, die Teil der Individualisierungsvorrichtung 9 oder mit dieser wirkverbunden sein kann. Grundsätzlich kann die Zertifizierungsvorrichtung 14a aber auch örtlich ungebunden und über das Kommunikationsnetz 6 angebunden sein (nach Art eines Zertifizierungsservers, um die Echtzeit der Zertifikate überprüfen zu können; dies ist dem Fachmann an sich geläufig). Das Echtheitszertifikat 14 kann vorzugsweise ein digitales Echtheitszertifikat sein; es ist vorzugsweise mit der Datei 5 bzw. der Kopie verknüpft, z.B. nach Art eines NFT (non-fungible token). Das Echtheitszertifikat 14 kann auch nach Art einer Urkunde gedruckt werden; es kann vorzugsweise die Information beinhalten, wann und/oder wo der Gegenstand individualisiert wurde.

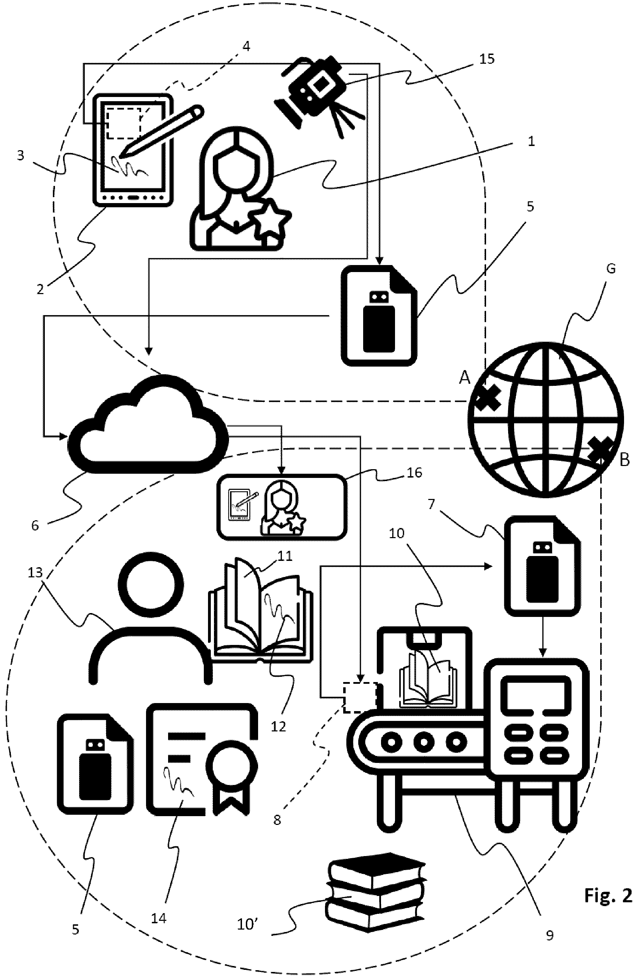

In der Figur 2 eine alternative Ausgestaltung gezeigt; es wird nur auf die wesentlichen Unterschiede gegenüber Figur 1 näher eingegangen. Die Zertifizierungsvorrichtung 14a (vgl. Figur 1) ist aus Gründen der Übersichtlichkeit in den Figuren 2 ff nicht erneut dargestellt.

Am Ort A wird mittels einer Aufnahmevorrichtung 15, die eine Digitalisierungsvorrichtung analog zu Bezugszeichen 4 in Figur 1 beinhaltet, ein digitales Bild- und Tonsignal vom Erzeugen der Original-Markierung 3 aufgezeichnet und über das Kommunikationsnetz 6 zum Ort B übertragen, wo es durch eine Anzeigevorrichtung 16 wiedergegeben wird, vorzugsweise live, ggf. zeitversetzt. Der Interessent 13 kann so der Berühmtheit 1 beim Erzeugen der Original-Markierung 3 zusehen. Wenn die Übertragung bidirektional ist (nicht dargestellt), kann der Interessent 13 mit der Berühmtheit 1 sprechen.

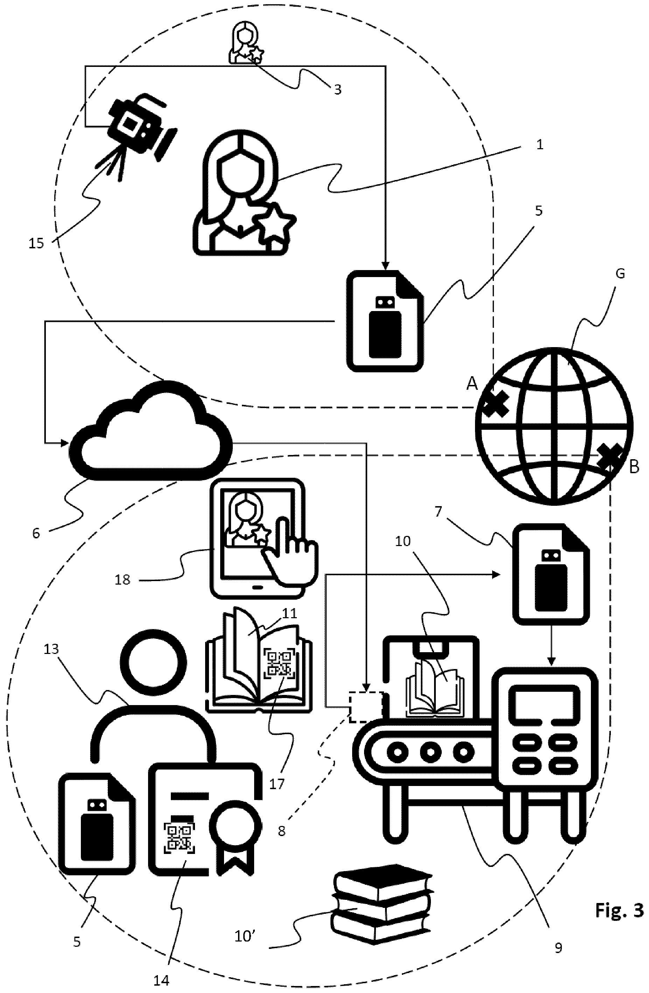

Gemäß der Figur 3 umfasst die Original-Markierung 3 eine Audio- und/oder Videobotschaft (Grußwort, Ständchen, ...) durch die Berühmtheit 1, die durch die Aufnahmevorrichtung 15, die eine Digitalisierungsvorrichtung analog zu Bezugszeichen 4 in Figur 1 beinhaltet, aufgezeichnet und als Datei 5 über das Kommunikationsnetz 6 zum Ort B übertragen und dort (oder anderswo) auf einem Server (nicht gezeigt) gespeichert wird. Wiederum kann die Umwandlung in die Datei 5 auch am Ort B erfolgen.

Anstelle der Reproduktion der Original-Markierung 3 selbst wird nun, in derselben Weise, wie zuvor beschrieben, eine die Original-Markierung repräsentierende Verkörperung in Form eines Links, z.B. in Form eines QR-Codes 17, einmalig oder anzahlmäßig beschränkt als Individualisierung auf den Gegenstand 10 aufgebracht, um diesen in einen individualisierten Gegenstand 11 umzuwandeln.

Durch Scannen des QR-Codes 17 mittels eines geeigneten Endgeräts 18 erhält der Interessent 13 Zugriff auf die Original-Markierung bzw. die gespeicherte Datei 5, die ihm wiederum auch als Kopie zur Verfügung gestellt werden kann.

Alle bisher gezeigten Ausführungsformen lassen sich beliebig miteinander kombinieren, z.B. handschriftliche Widmung mit Videobotschaft oder Videobotschaft mit Live-Übertragung. Auch eine handschriftliche Widmung oder dgl. kann in Form eines QR-Codes 17 oder in Form einer anderen Verkörperung für die Individualisierung genutzt werden.

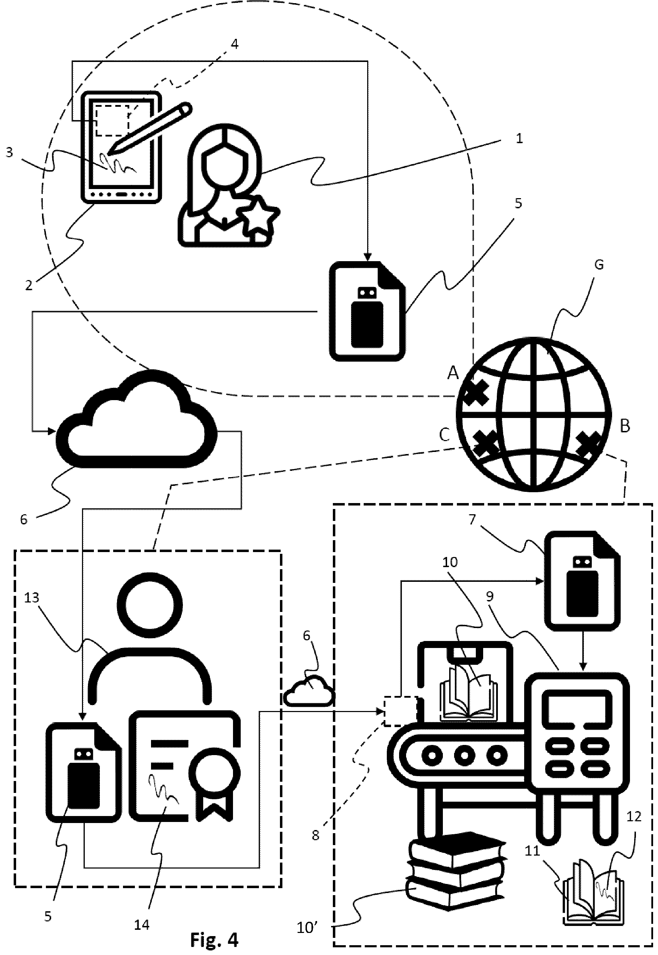

Figur 4 zeigt eine Variante, bei der der Interessent 13 sich an einem dritten Ort C aufhält, der von den beiden Orten A und B entfernt liegt. Er tritt als eigenständige, unabhängige Entität auf und erhält die Datei 5 und das betreffende Echtheitszertifikat direkt vom Ort A. Er kann sie bei sich (zwischen-) speichern, was nicht weiter dargestellt ist, und er selbst sorgt dann dafür, dass die Datei 5 zum Ort B gelangt, z.B. wiederum über das Kommunikationsnetz 6 (insbesondere per E-Mail oder dgl.), oder indem er selbst dorthin geht. Am Ort B wird dann der individualisierte Gegenstand 11 erzeugt, den der Interessent 13 mitnehmen kann oder der ihm zugeschickt wird.

Wenn der zu individualisierende Gegenstand ein digitales Objekt ist, verliert insbesondere der Ort B seine besondere Bedeutung und kann vollständig delokalisiert bzw. beliebig (auch verteilt) angeordnet sein. Der Gegenstand, z.B. ein digitales Musikstück, wird dann (irgendwo) mit einer entsprechend digitalen Reproduktion der Original-Markierung versehen und dem Interessenten mitsamt Echtheitszertifikat zur Verfügung gestellt (per Download oder als Datei-Anhang zu einer E-Mail). Bevorzugt passt die Art der Original-Markierung bzw. der Reproduktion zur Art des zu individualisierenden Gegenstands, d.h. gedruckte Reproduktion bei Druckerzeugnissen, Audio-/Video-Markierung bei digitalen Medien, etc.

Der Interessent muss den individualisierten Gegenstand nicht selbst behalten, sondern kann ihn verschenken oder gegen Entgelt weitergeben. Auch ein Erwerben und Verschenken der für die Individualisierung benötigten Datei (und optional des zu individualisierenden Gegenstands) kommt in Betracht.

Die Individualisierungsvorrichtung 9 kann auch als Herstellungsvorrichtung zum Herstellen des Gegenstands 10 ausgebildet sein oder mit einer Herstellungsvorrichtung zum Herstellen des Gegenstands 10 zusammenwirken, was in den Figuren nicht weiter dargestellt ist. Der Gegenstand wird dann "on demand" gefertigt, wenn z.B. die Datei 5 bei der Individualisierungsvorrichtung 9 eingeht oder wenn daraus die Markierungsdatei 7 erzeugt wurde, die - wie gesagt - auch Informationen bezüglich des zu individualisierenden Gegenstands 10 umfasst.

## Patentansprüche

1. Verfahren zum Individualisieren eines Gegenstands (10), beinhaltend:
a) Bereitstellen eines zu individualisierenden Gegenstands (10) sowie einer zum Individualisieren des Gegenstands (10) eingerichteten und ansteuerbaren digitalen oder analogen Individualisierungsvorrichtung (9);
b) Erzeugen einer Original-Markierung (3) und einer dieser Original-Markierung (3) entsprechenden digitalen Datei (5);
c) Erzeugen, basierend auf der genannten Datei (5), einer Markierungsdatei (7) mit Informationen bezüglich des Gegenstands (10) sowie der Original-Markierung (3), wobei die Markierungsdatei (7) zum einmaligen oder anzahlmäßig limitierten Reproduzieren der Original-Markierung (3) oder einer die Original-Markierung (3) repräsentierenden Verkörperung (17) in untrennbarem Zusammenhang mit dem zu individualisierenden Gegenstand (10) durch Ansteuern der Individualisierungsvorrichtung (9) ausgebildet ist;
d) Ansteuern der Individualisierungsvorrichtung (9) mittels der Markierungsdatei (7), so dass eine Reproduktion (12) der Original-Markierung (3) oder eine die Original-Markierung (3) repräsentierende Verkörperung (17) in einem untrennbaren Zusammenhang mit dem zu individualisierenden Gegenstand (10) erzeugt wird;
e) Erstellen eines sowohl mit der Datei (5) als auch mit dem individualisierten Gegenstand (11) verknüpften digitalen Echtheitszertifikats (14);
f) Ausgeben des individualisierten Gegenstands (11) zusammen mit dem Echtheitszertifikat (14) und optional zusammen mit der Datei (5).

2. Verfahren nach Anspruch 1, bei dem
• in Schritt a) der Gegenstand (10) und die Individualisierungsvorrichtung (9) an einem ersten Ort (B) bereitgestellt werden; und
• in Schritt b) die Datei (5) an einem zweiten Ort (A) erzeugt wird, der von dem ersten Ort (B) geographisch getrennt ist, und anschließend die Datei (5) von dem zweiten Ort (A) zu dem ersten Ort (B) über ein digitales Computer- oder Telekommunikationsnetz (6) übertragen wird; oder
• alternativ in Schritt b) eine der Original-Markierung (3) entsprechende Eingabe von einem zweiten Ort (A), der von dem ersten Ort (B) geographisch getrennt ist, zu dem ersten Ort (B) über ein digitales Computer- oder Telekommunikationsnetz (6) übertragen und eine der Eingabe entsprechende Datei (5) an dem ersten Ort erzeugt wird (B); und
• in Schritt f) der individualisierte Gegenstand (11) und das Echtheitszertifikat (14) an dem ersten Ort (B) ausgegeben werden.

3. Verfahren nach Anspruch 1 oder 2,
bei dem die Datei (5) derart erzeugt wird, dass sie fälschungssicher und/oder einzigartig und/oder handelbar ist, insbesondere in Form eines NFT.

4. Verfahren nach einem der Ansprüche 1 bis 3,
bei dem die in Schritt b) erzeugte Datei (5) einer von dem ersten Ort (B) und dem zweiten Ort (A) unabhängigen Entität (13) als Eigentum zur Verfügung gestellt wird, vorzugsweise entgeltlich, welche Entität (13) für eine Bereitstellung der Datei (5) an dem ersten Ort (B) zwecks Erzeugens der Markierungsdatei (7) gemäß Schritt c) und Ansteuerns der Individualisierungsvorrichtung (9) gemäß Schritt d) sorgt, vorzugsweise einmalig oder gemäß einer zahlenmäßig limitierten Anzahl.

5. Verfahren nach einem der Ansprüche 1 bis 4,
bei dem zusätzlich eine Bild- und/oder Tonübertragung erfolgt, insbesondere über das digitale Computer- oder Telekommunikationsnetz (6),
i) von dem zweiten Ort (A) zu dem ersten Ort (B) oder
ii) von dem ersten Ort (B) und/oder von dem zweiten Ort (A) zu wenigstens einem dritten Ort (C),
vorzugsweise jeweils bidirektional.

6. Verfahren nach einem der Ansprüche 1 bis 5,
bei dem eine der Original-Markierung (3) entsprechende Eingabe zumindest zum Teil per Hand, insbesondere handschriftlich oder als Zeichnung, oder als Audio- und/oder Videoaufzeichnung erfolgt.

7. Verfahren nach einem der Ansprüche 1 bis 6,
bei dem zeitlich parallel zu Schritt b) digital dokumentiert und in einer Dokumentationsdatei gespeichert wird, wie und/oder von wem die Original-Markierung (3) erzeugt wird und/oder für wen, an welchem Ort und/oder zu welcher exakten Ortszeit, wobei vorzugsweise die Dokumentationsdatei in Schritt f) mit ausgegeben wird.

8. System zum Individualisieren von Gegenständen (10, 10'), umfassend:
a) an einem ersten Ort (B) eine zum Markieren des Gegenstands (10) eingerichtete und ansteuerbare Individualisierungsvorrichtung (9), die zumindest während des Individualisierungsvorgangs mit einer Fixierungsvorrichtung zum Fixieren des Gegenstands (10) zusammenwirkt;
b) an einem zweiten Ort (A), der von dem ersten Ort (B) entfernt liegt, eine Eingabevorrichtung (2), die zum Erzeugen wenigstens einer Original-Markierung (3) durch Betätigen der Eingabevorrichtung (3) ausgebildet ist;
c) eine Digitalisierungsvorrichtung (4), die dazu ausgebildet ist, basierend auf der Original-Markierung (3) eine der Original-Markierung (3) entsprechende digitale Datei (5) zu erzeugen, wobei die Digitalisierungsvorrichtung (4) gemäß einer ersten Variante an dem zweiten Ort (A) und gemäß einer zweiten Variante an dem ersten Ort (B) vorhanden ist;
d) ein digitales Computer- oder Telekommunikationsnetz (6) zum Übertragen der Datei (5) von der Digitalisierungsvorrichtung (4) zu der Individualisierungsvorrichtung (9) bei der ersten Variante oder zum Übertragen einer der Original-Markierung (3) entsprechenden Eingabe von dem zweiten Ort (A) zu der Digitalisierungsvorrichtung (4) bei der zweiten Variante;
e) eine Ansteuerungsvorrichtung (8), die dazu ausgebildet ist, basierend auf der genannten Datei (5), eine Markierungsdatei (7) mit Informationen bezüglich des Gegenstands (10) sowie der Original-Markierung (3) zu erzeugen, wobei die Markierungsdatei (7) zum einmaligen oder anzahlmäßig limitierten Reproduzieren der Original-Markierung (3) oder einer die Original-Markierung (3) repräsentierenden Verkörperung (17) in untrennbarem Zusammenhang mit dem zu individualisierenden Gegenstand (10) durch Ansteuern der Individualisierungsvorrichtung (9) ausgebildet ist;
f) eine Zertifizierungsvorrichtung (14a), die zum Erstellen eines sowohl mit der Datei (5) als auch mit dem individualisierten Gegenstand (11) verknüpften, vorzugsweise digitalen Echtheitszertifikats (14) ausgebildet ist;
wobei die Individualisierungsvorrichtung (9) dazu ausgebildet ist, den Gegenstand (10) bei Ansteuerung der Individualisierungsvorrichtung (9) mittels der Markierungsdatei (7) mit einer Reproduktion (12) der Original-Markierung (3) oder einer die Original-Markierung (3) repräsentierenden Verkörperung (17) zu versehen.

9. System nach Anspruch 8,
bei dem die Eingabevorrichtung (2) als Eingabevorrichtung für eine Handzeichnung oder Handschrift ausgebildet ist, die vorzugsweise die Digitalisierungsvorrichtung (4) beinhaltet oder mit dieser wirkverbunden ist.

10. System nach Anspruch 8 oder 9,
bei dem gemäß der ersten Variante zwischen Digitalisierungsvorrichtung (4) und Individualisierungsvorrichtung (9) eine Zwischenstation mit einer Speichervorrichtung für die Datei (5) geschaltet ist, welche Zwischenstation vorzugsweise von dem ersten Ort (B) und/oder von dem zweiten Ort (A) unabhängig ist.

11. System nach einem der Ansprüche 8 bis 10,
bei dem die Datei (5) wenigstens eine der folgenden Eigenschaften besitzt: fälschungssicher, einzigartig, z.B. nach Art eines NFT, handelbar.

12. System nach einem der Ansprüche 8 bis 11,
bei dem der Gegenstand (10) ein Buch, Tonträger, Kunstwerk, Gebrauchsgegenstand oder Bekleidungsstück ist, wobei die Individualisierungsvorrichtung (9) eine Halteeinrichtung für den Gegenstand (10) und im Falle eines Buchs optional eine Umblättereinrichtung für die Buchseiten aufweist, die nach Maßgabe durch die Markierungsdatei (7) mit ansteuerbar ist.

13. System nach einem der Ansprüche 8 bis 12,
bei dem zumindest die Individualisierungsvorrichtung (9) mit einer Herstellungsvorrichtung zum Herstellen des Gegenstands (10) zusammenwirkt, so dass der Gegenstand (10) bei seiner Herstellung mit der Reproduktion (12) der Original-Markierung (3) oder der genannten Verkörperung versehbar ist;
wobei vorzugsweise die Individualisierungsvorrichtung (9) als Plotter, Drucker, Stempelvorrichtung oder Graviervorrichtung ausgebildet ist.

14. System nach einem der Ansprüche 8 bis 13,
bei dem das digitale Computer- oder Telekommunikationsnetz (6) für eine Echtzeitverbindung zwischen dem ersten Ort (B) und dem zweiten Ort (A) und vorzugsweise, bei Rückbezug auf Anspruch 10, auch zumindest von dem ersten Ort (B) und/oder dem zweiten Ort (A) zu der Zwischenstation (C) eingerichtet ist.

15. System nach einem der Ansprüche 8 bis 14,
bei dem das digitale Computer- oder Telekommunikationsnetz (6) zusätzlich für eine Übertragung von Bild und/oder Ton zwischen dem ersten Ort (B) und dem zweiten Ort (A) und vorzugsweise, bei Rückbezug auf Anspruch 10, auch zumindest von dem ersten Ort (B) und/oder dem zweiten Ort (A) zu der Zwischenstation (C) eingerichtet ist, vorzugsweise jeweils bidirektional.
